# EUROPEAN PATENT SPECIFICATION

(11) **EP 3 696 250 B1**
(45) Date of publication and mention of the grant of the patent: **03.08.2022**
(21) Application number: 20156370.7
(22) Date of filing: 10.02.2020
(51) Int. Cl.: C10G 3/00, C10G 45/60, C10G 45/64, C10G 47/06, C10G 47/20, C10G 65/12, C10G 65/10

(54) **CONVERSION OF NAPHTHA TO LPG IN RENEWABLE HYDROPROCESSING UNITS**
UMWANDLUNG VON NAPHTHA IN LPG IN ERNEUERBAREN HYDROVERARBEITUNGSEINHEITEN
CONVERSION DE NAPHTHA EN GPL DANS DES UNITÉS D'HYDROTRAITEMENT RENOUVELABLES

(30) Priority: 12.02.2019 DK PA201900195
(43) Date of publication of application: 19.08.2020
(73) Proprietor: Haldor Topsøe A/S, 2800 Kgs. Lyngby (DK)
(72) Inventor: ALKILDE, Ole Frej, 2500 Valby (DK)
(74) Representative: Topsoe A/S

(56) References cited:
- US-A- 3 579 434
- US-A1- 2011 166 396
- US-A1- 2011 166 405
- US-A1- 2016 289 135

## Description

The present invention belongs to the area of bio-LPG which is similar to conventional LPG (liquefied petroleum gas) in use and performance. Bio-LPG is an ideal energy solution for the industry as well as for individuals wishing to reduce their CO₂ footprint. Generally, the invention relates to a process for the preparation of biofuels. More specifically, the invention concerns the conversion of naphtha to LPG in renewable hydroprocessing units.

Hydrotreating, hydrocracking and hydroisomerization processes share many common features, so they are often discussed together as "hydroprocessing". Most hydroprocessing units employ specialized catalysts. As the name implies, they all consume hydrogen. Important chemical reactions include hydrodesulfurization (HDS), hydrodenitrogenation (HDN), hydrodeoxygenation (HDO), the saturation of olefins and aromatics, the conversion of long hydrocarbon molecules into shorter hydrocarbons (hydrocracking) and isomerization of hydrocarbons (hydroisomerization).

A renewable fuel is any fuel that originates from renewable sources, such as animal fat, used cooking oil, pyrolysis oil from waste or biological materials and other fuels which are not obtained by geological processes, such as those involved in the formation of fossil fuels, e.g. coal and petroleum. Renewable feedstocks comprise oxygenates taken from the group consisting of triglycerides, fatty acids, resin acids, ketones, aldehydes or alcohols where said oxygenates originate directly from a biological source, from a waste stream of a process employing raw materials from biological sources or from a gasification process, a pyrolysis process, Fischer-Tropsch synthesis, methanol-based synthesis or a further synthesis process wherein the raw materials originate from a biological source. Renewable hydroprocessing units are converting renewable feedstocks to valuable diesel and/or jet fuel by directing a renewable feedstock to a combination of a hydro-deoxygenation (HDO) reaction and a dewaxing reaction. A minor coproduction of naphtha (a flammable liquid hydrocarbon mixture) is also occurring, and some users or plants have no use for this. However, renewable LPG, fuel gas or methane can have a high value, and therefore the present invention is focused on converting this naphtha into lighter hydrocarbons (C1 to C4) in a second stage. This way, naphtha as an undesired side product is eliminated in a positive sense, because it is subsequently converted into valuable LPG or fuel gas.

It was found that if a renewable feedstock is directed to a combination of a hydro-deoxygenation (HDO) reaction and a dewaxing reaction, an amount of naphtha product is produced.

Accordingly, the present invention is defined in the appended claims.

In one embodiment of the process (sweet mode), the gases are separated between steps (a) and (b), and the hydrogenation component in step (b) is a noble metal.

In another embodiment of the process (sour mode), the gases are not separated between steps (a) and (b), and the hydrogenation component in step (b) is a sulfide base metal.

As regards the feedstock, a preferred feedstock comprises triglycerides, more preferably at least 40 wt% triglycerides, even more preferably at least 60 wt%. Suitably, the feedstock comprises vegetable oil, animal fat or fish oil to provide for the triglycerides. Preferably, the feedstock is vegetable oil, animal fat or fish oil, especially in anhydrous or refined form. The oil or fat may contain free fatty acids and/or monoesters of fatty acids (monoglycerides) and other compounds that naturally occur in the oil or fat, for example carotenoids, phosphatides, terpenes, sterols, fatty alcohols, tocopherols, polyisoprene, carbohydrates and proteins.

Suitable vegetable oils include rapeseed oil, coconut oil, corn oil, soybean oil, safflower oil, sunflower oil, linseed oil, olive oil and peanut oil. Suitable animal fats include pork lard, beef fat, mutton fat and chicken fat.

Particularly preferred feedstocks are rapeseed oil, corn oil and soybean oil, in particular soybean oil. It has been found that particularly the use of soybean oil results in good cold flow properties of the paraffinic hydrocarbons obtained.

The general prior art concerning preparation of biofuels comprises the following steps:
step 1. Hydrotreating / hydrodeoxygenation,
step 2. Possibly separation of hydrocarbons from gases (H₂, H₂S, H₂O, C1-C4, CO, CO₂, NH₃ etc.),
step 3. Hydroisomerization / hydrocracking,
step 4. Fractionation into one or more fractions:
   a) fuel gas (methane, ethane)
   b) LPG (propane, butane)
   c) naphtha (pentane up to around 150°C)
   d) kerosene / jet fuel (around 150-250°C)
   e) diesel (around 250-350°C)
   f) heavier components
      Fuel gas and LPG are often not separated; rather, the whole fraction is used as fuel gas,
      kerosene and diesel are often not separated; rather, the whole fraction is used as diesel, and
      heavier components are not found for certain feeds. step 5. Recycle of one or more fractions back to 1 or 3.

The idea underlying the present invention is to take fraction (c), i.e. the naphtha fraction, which may not fit the product mix of a plant, and send it to a new reactor to be converted to LPG, which may easily represent a greater value.

Regarding prior art in the field, US 7,846,323 B2 concerns a process for co-producing jet fuel and LPG from renewable sources. According to claim 7 of this patent, a "heavy fraction" (c) is sent back to the "hydroisomerizing step", but there is no indication of a separate step to convert naphtha to LPG.

US 8,193,399 B2 deals with "renewable hydroprocessing" in that it describes a process for producing diesel fuel from renewable feedstocks, such as plant oils or greases. The process involves treating a renewable feedstock by hydrogenating and deoxygenating to provide a diesel fuel hydrocarbon product. This hydrocarbon product can be isomerized to improve the cold flow properties, if desired. In the process, naphtha (c) is sent back to (3), but there is no explanation as to why this is done. In one of the claims, at least a portion of the naphtha stream is recycled to the same isomerization step, not to a separate reactor.

US 3,579,434 A (describing a method of hydrocracking naphtha to LPG using a catalyst composition comprising a small quantity of palladium), US 6,379,533 B1 (describing a catalytic hydrocracking process, which provides for the simultaneous production of LPG and distillate hydrocarbons) and WO 2016/102250 A1 (describing a process for producing LPG and BTX from a mixed hydrocarbon stream) all deal with hydrocracking of naphtha to LPG in a fossil context.

According to US 2010/0058648 A1, an integrated process has been developed for producing diesel boiling range fuel from renewable feedstocks, such as plant and animal fats and oils. The naphtha by-product is, however, not converted to LPG but rather used as a denaturant for ethanol.

US 2011/0071327 A1 relates to a process for co-producing jet fuel and LPG from renewable sources. So production of LPG is described, but the document is silent regarding any possible conversion of naphtha. This is also the case as regards US 2011/0319683 A1, which only relates to producing a naphtha product from a renewable feedstock, said product not being subjected to conversion.

Finally, WO 2011/012440 A2 describes a process for the production of bio-naphtha from complex mixtures of natural fats and oils. In one of the claims, light hydrocarbons are made, but this is done using steam cracking, not hydrocracking. So certain unsaturated compounds for petrochemistry purposes - rather than LPG - are made.

US 2016/289135 discloses a process for producing jet fuel.

In general, naphtha from hydroprocessing units is not being hydrocracked in conventional refineries. The first reason for this is that the naphtha from fossil hydrotreating has a reasonable octane number due to the presence of aromatics and iso-paraffins, which allows the stream to be used directly as a gasoline blending component, or as a high-value feedstock to further processing in e.g. catalytic reforming for further octane improvement. The second reason is that the naphtha stream typically is a rather small stream, and a hydrocracking unit is a complex and expensive unit, which makes it economically non-feasible to hydrocrack such a small stream.

Therefore, a skilled person was likely to assume that the naphtha from a hydrotreating unit would have a reasonable value as gasoline blending component and that hydrocracking of such a small stream would not be economically feasible. However, it has turned out that the naphtha from a renewable hydroprocessing unit - unlike typical fossil naphtha - is very paraffinic in nature, it has a very low octane number, and it is not usable as a gasoline blending component. This insight has led the Applicant to consider other possibilities that conventional hydroprocessing knowledge would not lead to. The present application details a novel process, which is a combination of renewable hydrotreating and naphtha hydrocracking, which allows hydrocracking of naphtha to LPG at a much reduced cost compared to the cost of constructing a stand-alone hydrocracking unit.

Hydro-deoxygenation conditions for glyceride and fatty acid containing feedstocks are known in the art. Typically, the hydro-deoxygenation temperature in step (a) is in the range from 250 to 380°C, preferably from 280 to 340°C and more preferably from 280 to 320°C. Since the hydro-deoxygenation reaction is a strongly exothermic reaction, the temperature in the bottom part of the bed will typically be higher than the temperature in the upper part of the bed.

The ratio of hydrogen-to-feed supplied to the catalyst of step (a) is typically in the range of from 200 to 10000 Nl, i.e. liters at standard conditions of temperature and pressure (0°C and 1 atm.) per liter of feed, preferably from 500 to 8000 Nl/l and more preferably from 1000 to 5000 Nl/l. Reference herein to feed is to the total of feedstock and diluents, i.e. to the total of feedstock and product recycle if the feedstock is diluted with a product recycle stream.

The total pressure in steps (a) and (b) is preferably in the range of from 20 to 160 bar (absolute), more preferably of from 40 to 120 bar (absolute), even more preferably of from 50 to 80 bar (absolute).

Specifically, the present invention relates to a process for preparing C1-C4 hydrocarbons from naphtha, which is produced as a by-product in a renewable hydroprocessing unit, in which various feedstocks, such as vegetable oils, animal fats and tall oils, are converted into diesel fuel and/or jet fuel,
wherein the naphtha is separated from the fractionated product stream and converted into C1-C4 hydrocarbons in a separate reactor in the presence of a hydrocracking catalyst. Preferably this is an active or highly active catalyst. In addition, a catalyst being selective towards producing naphtha from larger molecules is preferred, as such a catalyst will also be active in cracking naphtha into C1-C4 hydrocarbons. This separate reactor can be integrated with the main hydroprocessing section of the unit in order to minimize the cost.

The naphtha is produced as a lighter cut above the main product, typically minimized while still meeting diesel or jet flash point requirements. According to the process of the invention, this naphtha is sent to a second stage conversion reactor to be cracked into a C1-C4 hydrocarbon product with a selectivity towards fuel gas (C1-C2) or LPG (C3-C4) as required.

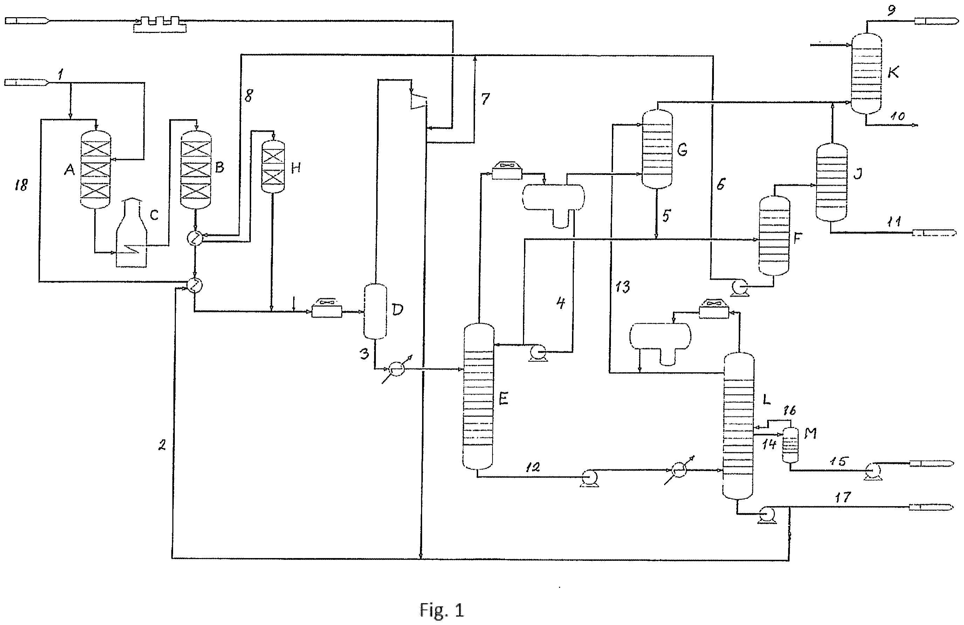

The process according to the invention can be carried out in a plant as shown in the appended figure. A feedstock, comprising e.g. vegetable oils, animal fats and/or tall oils, is treated in a manner known *per* se in a first stage reactor system comprising HDO reactors and a dewaxing reactor, to produce the normally desired kerosene/jet fuel and diesel. After separating off the fraction consisting of the fuel gas and the LPG in a stripper, the naphtha by-product is separated from the fuel gas and the LPG in a debutanizer and sent to an LPG conversion reactor, in which it is converted into the desired C1-C4 product.

More specifically, the figure shows a plant where renewable feed 1 is partly mixed with recycle oil 2 and treat gas 18 and sent through an HDO reactor A and from there through a dewaxing reactor B via a reactor heater C. After being passed through a cold separator D, the bottom fraction 3 is sent to a stripper E, which is also fed by the bottom fraction 4 (light naphtha) from a separator, where the top fraction consists of naphtha, C1-C4 + H₂S. Part of the light naphtha fraction 4 is sent to a debutanizer F after being mixed with rich oil 5 (C1-C2 + C3-C4 + heavy naphtha) from an LPG absorber G, thereby being a combined naphtha fraction containing C1-C4 and H₂S.

The bottom fraction 6 from the debutanizer F consists of stabilized naphtha, which is mixed with treatment gas 7 and fed to the LPG converter H as a combined LPG converter feed 8. The top fraction from the debutanizer F is C1-C2 + C3-C4, which is fed to a deethanizer J, where it is split into C1-C2 (top) and C3-C4 (bottom) fractions. The top fraction is mixed with the top fraction from the LPG absorber G (C1-C2 + H₂S) and fed to a fuel gas absorber K. The top fraction 9 from the fuel gas absorber K is C1-C2 fuel gas, while the bottom fraction 10 is H₂S. From the bottom of the deethanizer J, LPG 11 is recovered.

The bottom fraction 12 from the stripper E is passed to a fractionator L, from which the top fraction 13 of heavy naphtha is sent to the top of the LPG absorber G.

From the middle of the fractionator **L,** a fraction ***14*** is taken out and fed to a jet side stripper **M.** The bottom fraction ***15*** of the jet side stripper **M** is jet fuel, while the top fraction ***16*** is returned to the fractionator **L.**

From the bottom of the fractionator **L,** a diesel fraction is taken out partly as product ***17*** and partly used as recycle oil to the HDO reactor **A.** The jet fuel ***15*** and the diesel fraction ***17*** together are distillate products.

The invention is illustrated further in the example which follows.

### Example

Using the process of the invention, around 74 wt% jet fuel was prepared along with around 11 wt% naphtha. This naphtha by-product was converted into C1-C4 products over a commercial TK-751 catalyst produced by the applicant as shown in the yield table next page:

| Yields | 1^{st} stage product | 2^{nd} stage product | Combined |
|---|---|---|---|
| Feed | 100 | 10.8 | |
| H₂ | 4.12 | 0.67 | 4.79 |
| H₂S | 0.005 | | 0.005 |
| NH₃ | 0.002 | | 0.002 |
| water | 11.5 | | 11.5 |
| CO | 0.2 | | 0.2 |
| CO₂ | 1.2 | | 1.2 |
| C1-C4 | 6.4 | | 17.8 |
| C1 | 1.3 | 2.87 | 4.15 |
| C2 | 1.3 | 2.84 | 4.11 |
| C3 | 1.3 | 2.83 | 4.10 |
| iso-C4 | 1.3 | 1.47 | 2.74 |
| n-C4 | 1.3 | 1.47 | 2.74 |
| naphtha (C5 - 110°C) | 10.8 | | |
| jet (<110°C) | 74.0 | | 74.04 |
| Total | 104.117 | | 104.791 |
| Fuel gas (C1-C2) | 2.55 | | 8.26 |
| LPG (C3-C4) | 3.82 | | 9.59 |

## Claims

1. A process for producing jet fuel , including the following steps:
(a) contacting hydrogen and a renewable feedstock with a hydrogenation catalyst under hydro-deoxygenation conditions,
(b) contacting an amount of the effluent of step (a) with a hydroprocessing catalyst as hydrogenation component on a carrier comprising a zeolitic compound under hydrocracking conditions, and
(c) performing a fractionating step,
wherein the naphtha is separated from the fractionated product stream and converted into C1-C4 hydrocarbons in a separate reactor in the presence of hydrogen and a hydrocracking catalyst.

2. Process according to claim 1, wherein the gases are separated between steps (a) and (b), and wherein the hydrogenation component in step (b) is a noble metal.

3. Process according to claim 1, wherein the gases are not separated between steps (a) and (b), and wherein the hydrogenation component in step (b) is a sulfided base metal.

4. Process according to claim 1, wherein the feedstock comprises triglycerides, preferably at least 40 wt% triglycerides and most preferred at least 60 wt% triglycerides.

5. Process according to claim 1, wherein the feedstock is vegetable oil, animal fat or fish oil, especially in anhydrous or refined form.

6. Process according to claim 5, wherein the oil or fat contains free fatty acids and/or monoesters of fatty acids (monoglycerides) and other compounds that naturally occur in the oil or fat.

7. Process according to claim 1, wherein the separate reactor is integrated with the main hydroprocessing section of the unit.

8. Process according to claim 1, wherein the separated naphtha is sent to a second stage conversion reactor, where it is cracked into a C1-C4 hydrocarbon product having a selectivity towards fuel gas (C1-C2) or LPG (C3-C4) as required.

9. Process according to claim 1, wherein the hydrodeoxygenation temperature in step (a) is in the range from 250 to 380°C, preferably from 280 to 340°C and more preferred from 290 to 320°C.

## Patentansprüche

1. Verfahren zur Herstellung von Düsentreibstoff, umfassend die folgenden Schritte:
(a) Inkontaktbringen von Wasserstoff und einem erneuerbaren Einsatzmaterial mit einem Hydrierungskatalysator unter Hydrodesoxygenierungsbedingungen,
(b) Inkontaktbringen einer Menge des Abstroms von Schritt (a) mit einem Hydrobehandlungs-Katalysator als Hydrierungskomponente auf einem Träger, der eine zeolithische Verbindung umfasst, unter Hydrocrackbedingungen, und
(c) Durchführen eines Fraktionierungsschritts,
wobei das Naphtha von dem fraktionierten Produktstrom abgetrennt und in einem separaten Reaktor in Gegenwart von Wasserstoff und einem Hydrocrack-Katalysator in C1-C4-Kohlenwasserstoffe umgewandelt wird.

2. Verfahren gemäß Anspruch 1, wobei die Gase zwischen den Schritten (a) und (b) getrennt werden und wobei die Hydrierungskomponente in Schritt (b) ein Edelmetall ist.

3. Verfahren gemäß Anspruch 1, wobei die Gase zwischen den Schritten (a) und (b) nicht getrennt werden und wobei die Hydrierungskomponente in Schritt (b) ein sulfidiertes Nichtedelmetall ist.

4. Verfahren gemäß Anspruch 1, wobei das Einsatzmaterial Triglyceride umfasst, vorzugsweise mindestens 40 Gew.-% Triglyceride und besonders bevorzugt mindestens 60 Gew.-% Triglyceride.

5. Verfahren gemäß Anspruch 1, wobei das Einsatzmaterial Pflanzenöl, tierisches Fett oder Fischöl ist, insbesondere in wasserfreier oder raffinierter Form.

6. Verfahren gemäß Anspruch 5, wobei das Öl oder Fett freie Fettsäuren und/oder Monoester von Fettsäuren (Monoglyceride) und andere in dem Öl oder Fett natürlich vorkommende Verbindungen enthält.

7. Verfahren gemäß Anspruch 1, wobei der separate Reaktor in den Haupt-Hydrobehandlungs-Abschnitt der Einheit integriert ist.

8. Verfahren gemäß Anspruch 1, wobei das aufgetrennte Naphtha einem Umwandlungsreaktor zweiter Stufe zugeführt wird, wo es in ein C1-C4-Kohlenwasserstoffprodukt mit einer Selektivität nach Bedarf für Treibgas (C1-C2) oder Flüssiggas (C3-C4) gecrackt wird .

9. Verfahren gemäß Anspruch 1, wobei die Hydrodesoxygenierungstemperatur in Schritt (a) im Bereich von 250 bis 380 °C, vorzugsweise von 280 bis 340 °C und besonders bevorzugt von 290 bis 320 °C liegt.

## Revendications

1. Procédé de production de carburéacteur, comprenant les étapes suivantes:
(a) mise en contact d'hydrogène et d'une charge d'alimentation renouvelable avec un catalyseur d'hydrogénation dans des conditions d'hydrodésoxygénation,
(b) mise en contact d'une quantité de l'effluent de l'étape (a) avec un catalyseur d'hydrotraitement en tant que composant d'hydrogénation sur un support comprenant un composé zéolithique dans des conditions d'hydrocraquage et
(c) réalisation d'une étape de fractionnement,
le naphta étant séparé du flux de produit fractionné et converti en hydrocarbures en C1-C4 dans un réacteur séparé en présence d'hydrogène et d'un catalyseur d'hydrocraquage.

2. Procédé selon la revendication 1, les gaz étant séparés entre les étapes (a) et (b) et le composant d'hydrogénation dans l'étape (b) étant un métal noble.

3. Procédé selon la revendication 1, les gaz n'étant pas séparés entre les étapes (a) et (b) et le composant d'hydrogénation dans l'étape (b) étant un métal de base sulfuré.

4. Procédé selon la revendication 1, la charge d'alimentation comprenant des triglycérides, de préférence au moins 40 % en poids de triglycérides et le plus préférablement au moins 60 % en poids de triglycérides.

5. Procédé selon la revendication 1, la charge d'alimentation étant une huile végétale, une graisse animale ou une huile de poisson, en particulier sous forme anhydre ou raffinée.

6. Procédé selon la revendication 5, l'huile ou la graisse contenant des acides gras libres et/ou des monoesters d'acides gras (monoglycérides) et d'autres composés qui existent naturellement dans l'huile ou la graisse.

7. Procédé selon la revendication 1, le réacteur séparé étant intégré dans la section principale d'hydrotraitement de l'unité.

8. Procédé selon la revendication 1, le naphta séparé étant envoyé vers un réacteur de conversion de deuxième étage, où il est craqué en un produit hydrocarboné en C1-C4 présentant une sélectivité vis-à-vis du gaz combustible (C1-C2) ou du LPG (C3-C4) selon les besoins.

9. Procédé selon la revendication 1, la température d'hydrodésoxygénation dans l'étape (a) étant située dans la plage de 250 à 380 °C, de préférence de 280 à 340 °C et plus préférablement de 290 à 320 °C.
